# EUROPEAN PATENT APPLICATION

(11) **EP 4 537 915 A1**
(43) Date of publication of application: **16.04.2025**
(21) Application number: 23386098.0
(22) Date of filing: 13.10.2023
(51) Int. Cl.: A63F 13/422, A63F 13/5375, A63F 13/56, A63F 13/67

(54) **DATA PROCESSING APPARATUS AND METHOD**

(71) Applicant: Sony Interactive Entertainment Inc., Tokyo 108-0075 (JP)
(72) Inventor: Michailidis, Lazaros, London, W1F 7LP (GB); Leung, Jun, London, W1F 7LP (GB); Eder, Michael, London, W1F 7LP (GB); Breugelmans, Mark Jacobus, London, W1F 7LP (GB); Andall, Hogarth, London, W1F 7LP (GB)
(74) Representative: D Young & Co LLP

(57) **Abstract**

A data processing apparatus comprising circuitry configured to: obtain video game data from a video game application indicating an in-game situation; obtain data indicating a predicted in-game action of a first user in response to the in-game situation, the data indicating the predicted in-game action of the first user being based on past video game data and past in-game actions of one or more second users; determine, based on a recorded input from the first user, whether or not the predicted in-game action is instructed by the first user; and based on the determination, perform a reconfiguration process for reconfiguring a required input for the first user for instructing the predicted in-game action.

## Description

### BACKGROUND

### Field of the Disclosure

This disclosure relates to a data processing apparatus and method.

### Description of the Related Art

The "background" description provided is for the purpose of generally presenting the context of the disclosure. Work of the presently named inventors, to the extent it is described in the background section, as well as aspects of the description which may not otherwise qualify as prior art at the time of filing, are neither expressly or impliedly admitted as prior art against the present disclosure.

Traditionally, the controls for a video game are fixed by a video game developer in advance. Players need to learn these controls in order to play the game. However, sometimes, a player may have a tendency to activate the wrong control for a particular action. This may be because, for example, the user has recently been playing another game with a similar action which uses another control.

It is often possible for users to reconfigure game controls according to their preferences. However, this is traditionally a manual reconfiguration process involving pausing or delaying gameplay and navigating through a number of menus. This can be cumbersome and time consuming. There is therefore a desire to address this problem.

### SUMMARY

The present disclosure is defined by the claims.

### BRIEF DESCRIPTION OF THE DRAWINGS

Non-limiting embodiments and advantages of the present disclosure are explained with reference to the following detailed description taken in conjunction with the accompanying drawings, wherein:
Fig. 1 schematically shows an example entertainment system;
Figs. 2A and 2B schematically show example components associated with the entertainment system;
Fig. 3 schematically shows an example gaming controller;
Figs. 4A to 4C schematically show a first example gaming situation;
Fig. 5 shows an example of machine learning training data;
Fig. 6 schematically shows a message box proposing a reconfiguration of gaming controls;
Figs. 7A and 7B schematically show examples of pose estimation for a user;
Fig. 8 schematically shows a second example gaming situation;
Figs. 9A to 9C schematically show example control-timing combinations;
Fig. 10 schematically shows an example system; and
Fig. 11 shows an example method.

Like reference numerals designate identical or corresponding parts throughout the drawings.

### DETAILED DESCRIPTION OF THE EMBODIMENTS

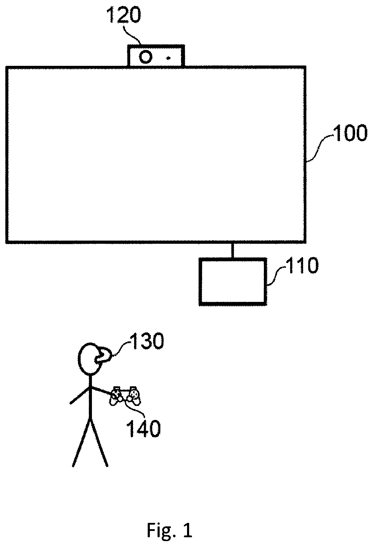

Fig. 1 schematically illustrates an entertainment system suitable for implementing one or more of the embodiments of the present disclosure. Any suitable combination of devices and peripherals may be used to implement embodiments of the present disclosure, rather than being limited only to the configuration shown.

A display device 100 (e.g. a television or monitor), associated with a games console 110, is used to display content to one or more users. A user is someone who interacts with the displayed content, such as a player of a game, or, at least, someone who views the displayed content. A user who views the displayed content without interacting with it may be referred to as a viewer. This content may be a video game, for example, or any other content such as a movie or any other video content. The games console 110 is an example of a content providing device or entertainment device; alternative, or additional, devices may include computers, mobile phones, set-top boxes, and physical media playback devices, for example. In some embodiments the content may be obtained by the display device itself - for instance, via a network connection or a local hard drive.

One or more video and/or audio capture devices (such as the integrated camera and microphone 120) may be provided to capture images and/or audio in the environment of the display device. While shown as a separate unit in Fig. 1, it is considered that such devices may be integrated within one or more other units (such as the display device 100 or the games console 110 in Fig. 1).

In some implementations, an additional or alternative display device such as a head-mountable display (HMD) 130 may be provided. Such a display can be worn on the head of a user, and is operable to provide augmented reality or virtual reality content to a user via a near-eye display screen. A user may be further provided with a video game controller 140 which enables the user to interact with the games console 110. This may be through the provision of buttons, motion sensors, cameras, microphones, and/or any other suitable method of detecting an input from or action by a user.

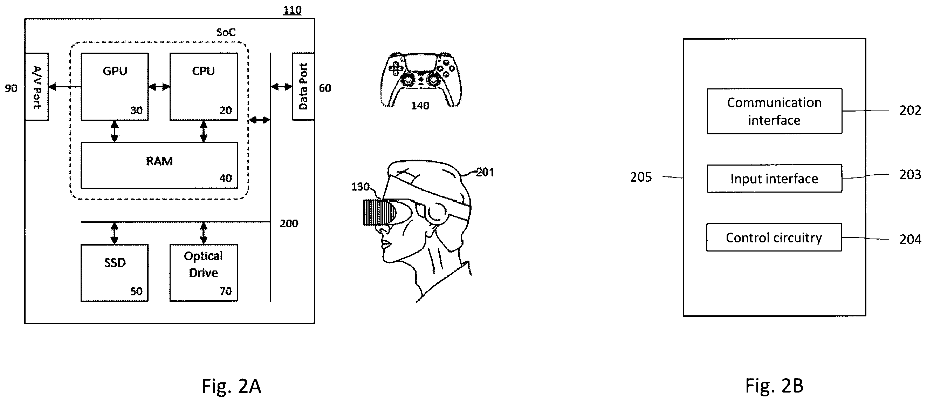

Fig. 2A shows an example of the games console 110. The games console 110 is an example of a data processing apparatus.

The games console 110 comprises a central processing unit or CPU 20. This may be a single or multi core processor, for example comprising eight cores. The games console also comprises a graphical processing unit or GPU 30. The GPU can be physically separate to the CPU, or integrated with the CPU as a system on a chip (SoC).

The games console also comprises random access memory, RAM 40, and may either have separate RAM for each of the CPU and GPU, or shared RAM. The or each RAM can be physically separate, or integrated as part of an SoC. Further storage is provided by a disk 50, either as an external or internal hard drive, or as an external solid state drive (SSD), or an internal SSD.

The games console may transmit or receive data via one or more data ports 60, such as a universal serial bus (USB) port, Ethernet ^{®} port, WiFi ^{®} port, Bluetooth ^{®} port or similar, as appropriate. It may also optionally receive data via an optical drive 70.

Interaction with the games console is typically provided using one or more instances of the controller 140. In an example, communication between each controller 140 and the games console 110 occurs via the data port(s) 60.

Audio/visual (A/V) outputs from the games console are typically provided through one or more A/V ports 90, or through one or more of the wired or wireless data ports 60. The A/V port(s) 90 may also receive audio/visual signals output by the integrated camera and microphone 120, for example. The microphone is optional and/or may be separate to the camera. Thus, the integrated camera and microphone 120 may instead be a camera only. The camera may capture still and/or video images.

Where components are not integrated, they may be connected as appropriate either by a dedicated data link or via a bus 200.

As explained, examples of a device for displaying images output by the game console 110 are the display device 100 and the HMD 130. The HMD is worn by a user 201. In an example, communication between the display device 100 and the games console 110 occurs via the A/V port(s) 90 and communication between the HMD 130 and the games console 110 occurs via the data port(s) 60.

The controller 140 is an example of a peripheral device for allowing the games console 110 to receive input from and/or provide output to the user. Examples of other peripheral devices include wearable devices (such as smartwatches, fitness trackers and the like), microphones (for receiving speech input from the user) and headphones (for outputting audible sounds to the user).

Fig. 2B shows some example components of a peripheral device 205 for receiving input from a user. The peripheral device comprises a communication interface 202 for transmitting wireless signals to and/or receiving wireless signals from the games console 110 (e.g. via data port(s) 60) and an input interface 203 for receiving input from the user. The communication interface 202 and input interface 203 are controlled by control circuitry 204.

In an example, if the peripheral device 205 is a controller (like controller 140), the input interface 203 comprises buttons, joysticks and/or triggers or the like operable by the user. In another example, if the peripheral device 205 is a microphone, the input interface 203 comprises a transducer for detecting speech uttered by a user as an input. In another example, if the peripheral device 205 is a fitness tracker, the input interface 203 comprises a photoplethysmogram (PPG) sensor for detecting a heart rate of the user as an input. The input interface 203 may take any other suitable form depending on the type of input the peripheral device is configured to detect.

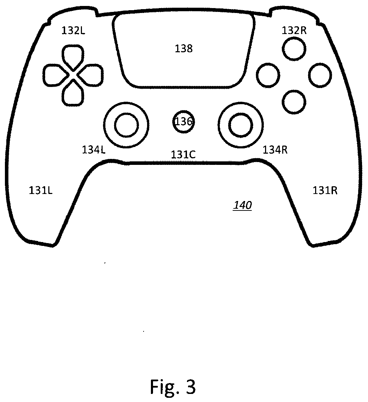

Figure 3 illustrates an example of a controller 140. Such a controller typically has two handle sections 131L, 131R and a central body 131C. Various controls are distributed over the controller, typically in local groups. Examples include a left button group 132L, which may comprise directional controls and/or one or more shoulder buttons, and similarly right button group 132R, which may comprise function controls and/or one or more shoulder buttons. The controller also includes left and/or right joysticks 134L, 134R, which may optionally also be operable as buttons by pressing down on them.

The controller (typically in a central portion of the controller) may also comprise one or more system buttons 136, which typically cause interaction with an operating system of the entertainment device rather than with a game or other application currently running on it. Such buttons may summon a system menu or allow for recording or sharing of displayed content, for example. Furthermore, the controller may comprise one or more other elements such as a touchpad 138, a light for optical tracking (not shown), a screen (not shown), haptic feedback elements (not shown), and the like.

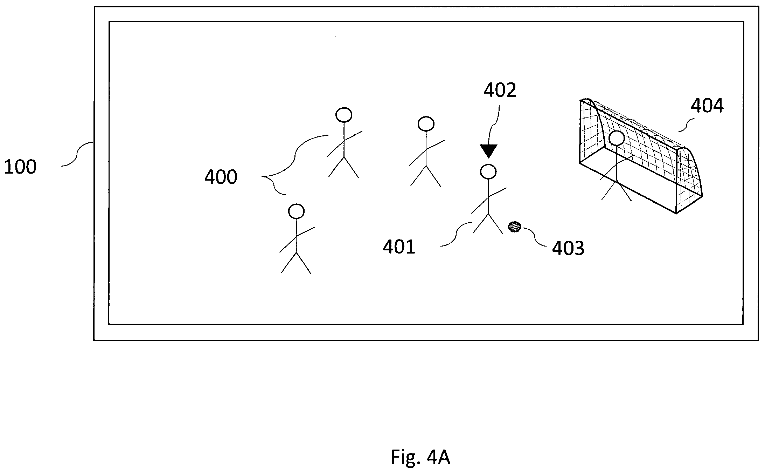

Figs. 4A to 4C indicate an example in which accidently selecting a wrong one of the controls on controller 140 causes an undesirable consequence in a video game. In this example, the video game is a soccer simulation game, with soccer players 400 controllable to play soccer with a ball 403.

In such soccer simulation games, one button is for controlling a soccer player in the game to "shoot" (that is, kick the ball towards the goal 404 in an attempt to score). Another button is for controlling a soccer player in the game to "lob" (that is, kick the ball far and high to allow a player at a different part of the pitch to try to receive the ball).

In different soccer simulation games by different developers, the controls for the same action (e.g. "shoot" or "lob") may be different. For example, in a first soccer simulation game, a first predetermined control of the controller 104 (e.g. the "circle" button) is used to shoot and a second predetermined control of the controller 104 (e.g. the "square" button) is used to lob. On the other hand, in a second soccer simulation game, the role of the first and second predetermined controls may be reversed, so the second predetermined button of the controller 104 (e.g. the "square" button) is to shoot and the first predetermined button of the controller 104 (e.g. the "circle" button) is used to lob. This can lead to problems if, for example, a user is used to playing a first soccer simulation game but then plays a different soccer simulation game soon afterwards.

This is shown in Figs. 4A to 4C. In Fig. 4A, the player 401 currently being controlled by the user (indicated by visual indicator 402) has possession of the ball 403 and is positioned in a favourable position to shoot at the goal 404 in an attempt to score.

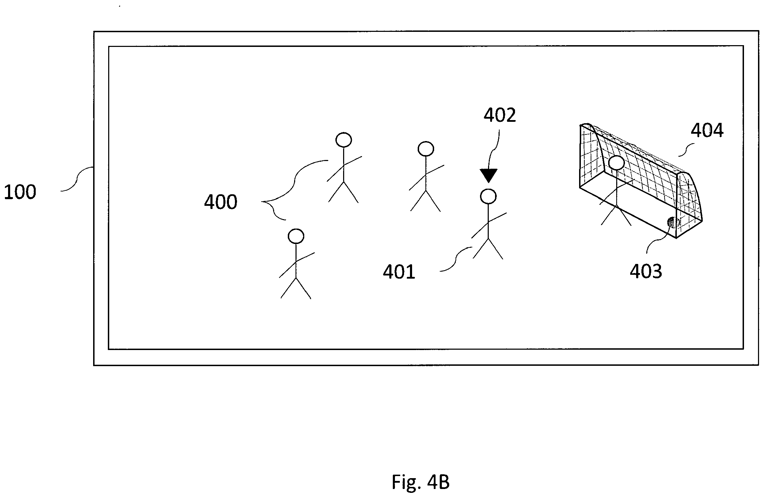

If this is the first soccer simulation game and the user is used to playing this particular game (with its predetermined controls), it is easy for the user activate the correct control (e.g. the "circle" button) based on muscle memory and successfully shoot. This is shown in Fig. 4B, in which it can be seen a goal has been successfully scored.

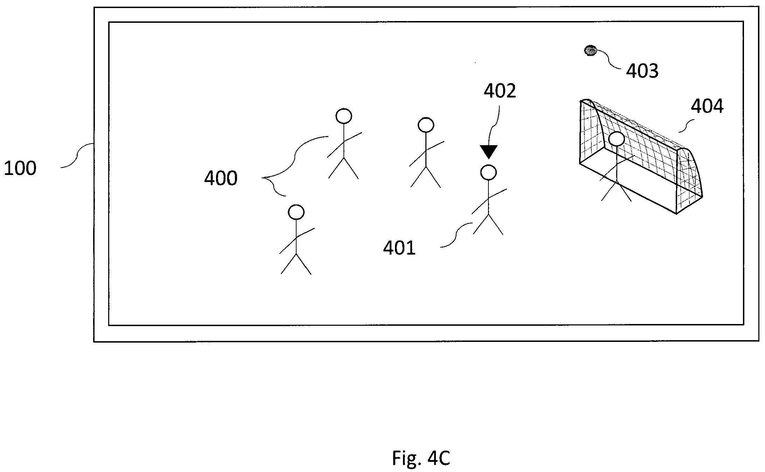

On the other hand, if the user is not used to playing this particular game and they are, instead, used to playing the second soccer simulation game (with its different predetermined controls), it is easy for the user to activate the control (e.g. the "square" button) which, in the second game, would be correct but, in the first game (which they are currently playing), is incorrect. If they do this (again, based on muscle memory), the player 401 will not be controlled to shoot but will instead by controlled to lob the ball. This is shown in Fig. 4C, in which it can be seen the ball 403 is kicked over the goal 404 and the opportunity to score has been missed.

This can be highly frustrating for a user, since their performance in the game is negatively affected not by a lack of skill or ability but by a lack of familiarity with the standard controls of the game.

Most games allow the standard control configuration to be manually adjusted by a user via a settings menu or the like. However, this is often cumbersome and time consuming. For example, it can often be the case that a user has already started playing the game and it is only when they try to take a particular action (e.g. taking a shot in front of the goal 404) and the wrong action occurs (e.g. the ball 404 is lobbed over the goal) that they realise the standard control configuration may not be suitable for them. They then have to either pause or exit the game to manually change the control configuration, thereby undesirably interrupting and delaying the gameplay.

The present technique helps alleviate this problem by allowing the games console 110 to automatically detect when a user may be accidently activating the wrong control during a particular in-game situation and suggesting a different control configuration accordingly. This may be achieved using a suitable machine learning technique, in particular supervised machine learning using a machine learning model (executed by the CPU 20, GPU 30 and/or one or more processors of a server connected to the games console 110 over a network such as the internet) trained using labelled training data.

A supervised learning model is trained using labelled training data to learn a function that maps inputs (typically provided as feature vectors) to outputs (i.e. labels). The labelled training data comprises sets of one or more inputs and corresponding output labels. The output labels are provided by an operator to indicate the desired output for each input. The supervised learning model processes the training data to produce an inferred function that can be used to map new (i.e. unseen) inputs to an output label.

The input data (during training and/or inference) may comprise various types of data, such as numerical values, images, video, text, or audio. Raw input data may be pre-processed to obtain an appropriate feature vector used as input to the model. For example, features of an image or audio input may be extracted to obtain a corresponding feature vector. It will be appreciated that the type of input data and techniques for pre-processing the data (if required) may be selected based on the specific task the supervised learning model is used for.

Once prepared, the labelled training data set is used to train the supervised learning model. During training, the model adjusts its internal parameters (e.g. weights) so as to optimize (e.g. minimize) an error function, aiming to minimize the discrepancy between the model's predicted outputs and the labels provided as part of the training data. In some cases, the error function may include a regularization penalty to reduce overfitting of the model to the training data set.

The supervised learning model may use one or more machine learning algorithms in order to learn the mapping between its inputs and outputs. Example suitable learning algorithms include linear regression, logistic regression, artificial neural networks, decision trees, support vector machines (SVM), random forests, and the K-nearest neighbour algorithm.

Once trained, the supervised learning model may be used for inference - i.e. for predicting outputs for previously unseen input data. The supervised learning model may perform classification and/or regression tasks. In a classification task, the supervised learning model predicts discrete class labels for input data, and/or assigns the input data into predetermined categories. In a regression task, the supervised learning model predicts labels that are continuous values.

In some cases, limited amounts of labelled data may be available for training of the model (e.g. because labelling of the data is expensive or impractical). In such cases, the supervised learning model may be extended to further use unlabelled data and/or to generate labelled data.

Considering using unlabelled data, the training data may comprise both labelled and unlabelled training data, and semi-supervised learning may be used to learn a mapping between the model's inputs and outputs. For example, a graph-based method such as Laplacian regularization may be used to extend a SVM algorithm to Laplacian SVM in order to perform semi-supervised learning on the partially labelled training data.

Considering generating labelled data, an active learning model may be used in which the model actively queries an information source (such as a user or operator) to label data points with the desired outputs. Labels are typically requested for only a subset of the training data set, thus reducing the amount of labelling required as compared to fully supervised learning. The model may choose the examples for which labels are requested. For example, the model may request labels for data points that would most change the current model or that would most reduce the model's generalization error. Semi-supervised learning algorithms may then be used to train the model based on the partially labelled data set.

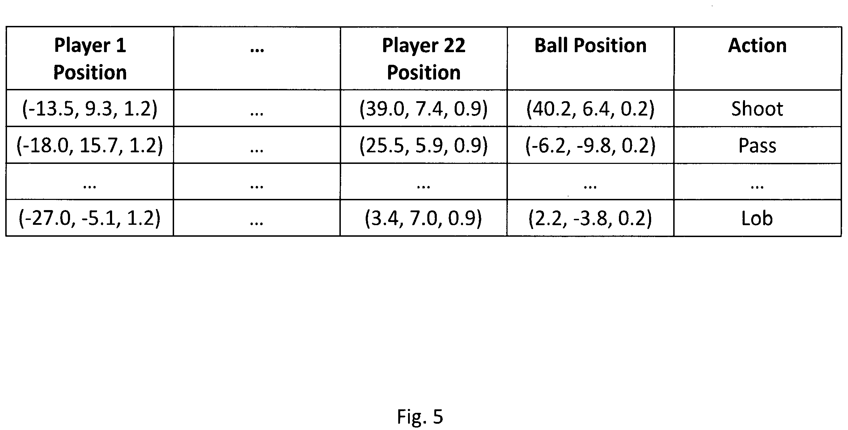

Fig. 5 shows a simplified example of training data that may be used with the present technique. The training data corresponds to the soccer game example discussed with reference to Figs. 4A to 4C.

Here, the inputs (independent variables) are the position of each of the soccer players (of which there are 22 in total) and of the ball in a three-dimensional (3D) virtual space representing the soccer pitch in the soccer simulation game. The labelled outputs (dependent variables) are the action that was taken by the user (e.g. shoot, lob or pass - pass being kicking the ball along the ground from one player to another) at the point at which the player positions were recorded.

In this example, player and ball positions are centre of mass positions and the positions are in metres (with the origin of the coordinate system in metres being at the centre of the virtual soccer pitch at ground level). However, any other suitable unit (e.g. a normalised unit extending between -1 and 1 in each of the three dimensions) could be used.

In an example, the training data is collected from real game data collected from players of the particular video game concerned. For example, users may give permission for their gameplay data to be used in training the model. Each time that user takes a particular action, the position of each of the players and ball is recorded and associated with the label (e.g. "Shoot", "Lob", "Pass") indicating the action. The training data set is thus gradually built up.

Once a sufficient amount of training data has been obtained (e.g. a predetermined number such as 10000, 25000, 50000 or 100000 of sets of input and output data, each set corresponding to one row of a table like that shown in Fig. 5), the training data is used to train a suitable classification machine learning model (like one of those mentioned above). Future input data can then be used to classify the predicted action a user will take for given input position data. This is then compared with the action the user did take. If this deviates from the predicted action a predetermined number of times (e.g. once, twice or three times) in succession, a suggestion is provided to the user to appropriately adjust the control configuration. In an example, the training data is obtained from a predetermined number of different users, such as 100, 200, 300, 500 or 1000 different users, with each user providing at least a predetermined number of sets of input and output data (e.g. at least 100 sets per user).

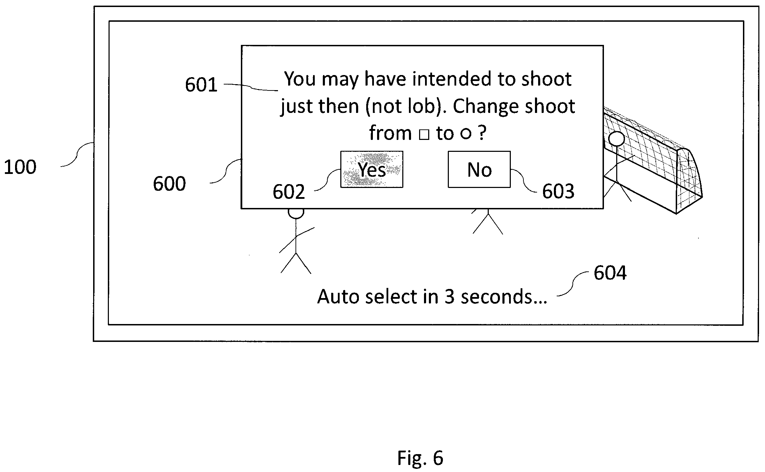

This is exemplified in Fig. 6. In this example, based on the position of each player and the ball on the pitch, it is determined that "shoot" is the most appropriate command. However, it has been recognised that the user has instead selected "lob" a predetermined number of times in succession. This causes a message box 600 to be displayed.

The message box includes a textual message 601 (although a message in a different format, e.g. an audio message or the like, could be provided) indicating to the user that it has been recognised they have executed a "lob" rather than a "shoot" function using the controller 104. The message also asks the user whether they wish to change the control configuration accordingly.

In this example, the standard control configuration for this particular video game is the "square" button to shoot and the "circle" button to lob. Given the user appears to be selecting the "lob" command (by pressing the circle button) instead of the "shoot" command (by pressing square button) which, based on the trained machine learning model, is likely to not be what the user intends, the user is presented with the option to change the control configuration so that pressing the circle button corresponds to the shoot command instead of pressing the square button (with, correspondingly, pressing the square button now corresponding to the lob command instead of pressing the circle button). In other words, it is proposed the buttons for the lob and shoot commands are swapped.

The user is presented with a first virtual "Yes" button 602 and a second virtual "No" button 603. Selection of the "Yes" button causes the control reconfiguration as suggested by the message 601 to be confirmed. The message box 600 then disappears and the game is continued (the game is automatically paused while the message box is displayed, for example). Selection of the "No" button, on the other hand, causes the message box to disappear without the control reconfiguration being executed and the game to be continued. If the user does not select either virtual button within a predetermined period of time (e.g. 5 seconds), a default selection (e.g. selection of a current highlighted virtual button, in this case, the "Yes" button) is made. This is indicated to the user by a countdown timer 604 which counts down (in increments of one second, for example) to indicate to the user when the default selection will be made.

The present technique thus allows it to be automatically recognised when a user may prefer a different control configuration (e.g. because they are used to playing a different virtual soccer game where the functionality of the square and circle buttons is reversed) and to suggest to the user what that different control configuration might be. The user is then able to proceed with or reject the suggestions through the simple selection of "Yes" or "No" during gameplay, thereby allowing the control configuration to be quickly and easily adjusted with reduced gameplay interruption.

Depending on the game and/or the user, a user may or may not wish for this functionality to be enabled. It may therefore be disabled using a suitable settings menu (e.g. a settings menu specific to the video game or the general settings menu of the games console 110).

Additional information may be used in order to determine a help determine user's intended action. For example, real time video of the user may be captured as the user plays the game (with the user's permission) and pose determination (using any suitable pose estimation technique known in the art and implemented at the system level of the games console, for example) may be used with the likely intended command in any given in-game situation to help determine the command the user intended and, if necessary, provide the user with an option to reconfiguration the relevant controls.

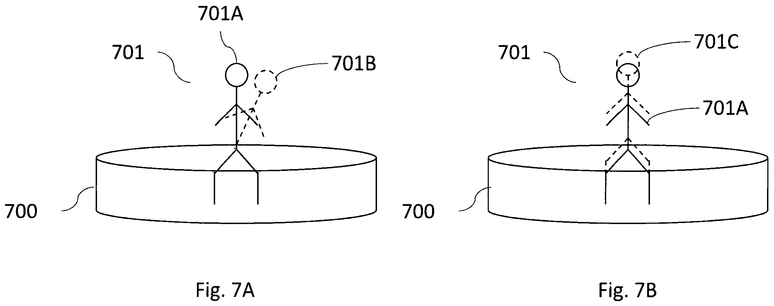

This is exemplified in Figs. 7A and 7B.

In both examples, suitable gameplay data is input to a suitably-trained machine learning model in the way to determine a likely intended action of the user given a particular in-game situation. The player and ball position data discussed above is an example of such gameplay data. Other gameplay data may include, for example, the position of a player's character relative to each of a number of enemy characters (e.g. in a first person shooter) or the position of a player's character along a racing track (e.g. in a racing game). In any case, given a particular in-game situation, the machine learning model classifies the current input gameplay data to output a likely intended action of the user. The likely intended action is then used to generate a control reconfiguration recommendation to the user (like that of message box 600) only if a pose (or change in pose) of the user determined by the pose estimation also indicates the likely intended action output by the machine learning model.

In the example Fig. 7A, the user 701 is initially sitting up straight, as indicated by pose 701A. However, at a later time they are detected as leaning to the left (from the perspective of the user 701), as indicated by pose 701B. If this change in pose (from sitting up straight to leaning to the left) occurs at the same time as when (or within a predetermined time period, e.g. 1 or 2, seconds of when) the user is expected to turn left in a racing game (based on the prediction from the machine learning model given the user's current position on a racing track, for example) but, instead, executes a command to turn right, this provides the system with two indications that the user might benefit from a control reconfiguration (e.g. to swap the controls that control left and right turns). In response to both indications (the classification of the machine learning model and the behaviour of the user based on the pose estimation), a control reconfiguration message (like that of message box 600) is displayed to the user.

In the example of Fig. 7B, the user 701 is again initially sitting up straight, as indicated by pose 701A. However, at a later time they are detected as jumping in their seat, as indicated by pose 701C. If this change in pose (from sitting up straight to jumping in their seat) occurs at the same time as when (or within a predetermined time period, e.g. 1 or 2, seconds of when) the user is expected to turn cause a character to jump over an obstacle in an action adventure game (based on the prediction from the machine learning model given the user's current position on a map, for example) but, instead, executes a command to crouch, this provides the system with two indications that the user might benefit from a control reconfiguration (e.g. to swap the controls that control jumping and crouching turns). In response to both indications (the classification of the machine learning model and the behaviour of the user based on the pose estimation), a control reconfiguration message (like that of message box 600) is displayed to the user.

Using multiple indications (e.g. machine learning and pose estimation) in this way helps reduce the chance of control reconfiguration messages being provided to a user at inappropriate times, thereby reducing the risk of such messages unnecessarily interrupting gameplay.

In an example, the presence of multiple indications may be used to allow a control reconfiguration message to be presented to a user more quickly than only a single indication were relied on. This is because multiple indications allow the system to determine, with more confidence, that a control reconfiguration message might be helpful to the user. For example, in the above examples, it may be that, based on the single indication of a user deviating from an expected command output by the machine learning model, this must occur three times in succession before a control reconfiguration message is presented. On the other hand, based on the multiple indications of the user both deviating from the expected command and implying that a different command than the one input was intended based on their detected pose, this may only need to occur once before the control reconfiguration message is presented. This helps a user to be assisted more quickly when there are multiple indications of an inappropriate control configuration while reducing the chance of unnecessary game interruption if there is only a single such indication.

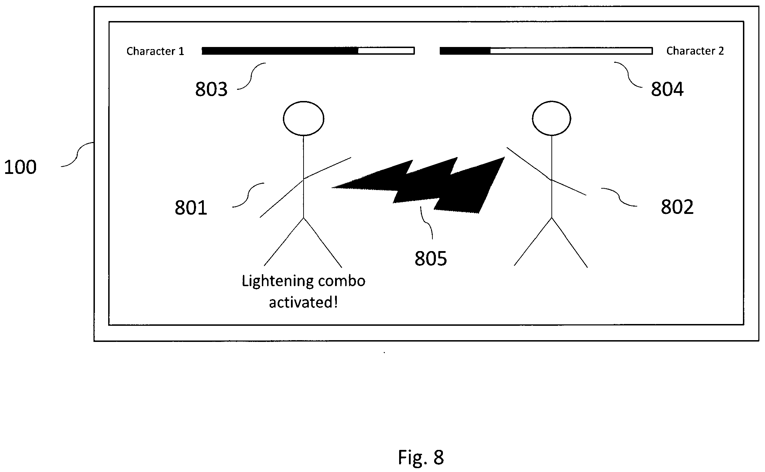

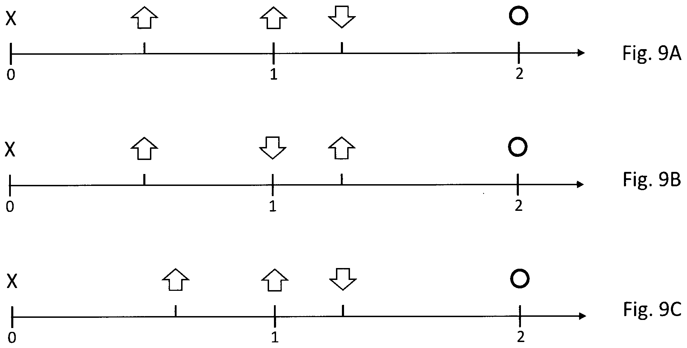

Figs. 8 and 9 show another example in which additional information can be used to help determine a user's intended action and offer appropriate adjustments. This example relates to a combat game in which one character 801 ("Character 1") is controlled by the user to engage in combat with another character 802 ("Character 2"). The other character 802 is either controlled by another user or is a non-player character, for example. Each character has a health bar which shows the amount of health they have (in this example, Character 1 currently has more health remaining than Character 2). The object is the game is to use combat moves to virtually harm your opponent until they have no health remaining. This must usually be repeated over multiple rounds to win the game.

In certain combat games, characters are selectable from a plurality of predetermined characters with different characteristics. Included in those characteristics are so-called special moves, which involve the user inputting a predetermined combination of input controls at a predetermined timing to cause the special move to be executed. Different characters have different special moves executable with different respective control combinations. Part of the challenge is for a user to learn that control combination and execute it correctly at an appropriate time during the game for it to have maximum effect.

Gameplay data including the combination of characters playing, the time elapsed during the current round and the relative amounts of health of each of the characters may be used with an appropriately-trained machine learning model to predict when the user is likely to want to use a special move. In this case, the user wishes Character 1 to execute the "lightening combo" special move. This requires a predetermined combination of controls to be input at the timings shown in Fig. 9A. This may be referred to as a control-timing combination.

The control-timing combination of Fig. 9A is an example using the controls of the controller (although it will be appreciated the described concept is not limited to this and may be applied more generally) and comprises pressing the "X" button, followed by pressing the "Up" directional button a first time, followed by pressing the "Up" directional button a second time, followed by pressing the "Down" directional button, followed by pressing the "Circle" button.

This combination of button presses must occur over a 2-second time period which is initiated by pressing the "X" button. In addition, the first press of the "Up" button must occur at 0.50 seconds within the 2-second time period, the second press of the "Up" button must occur at 1.00 seconds within the 2-second time period, the press of the "Down" button must occur at 1.25 seconds within the 2-second time period and the press of the "Circle" button must occur at 2.00 seconds within the 2-second time period. An allowable margin of error may be introduced. For example, the margin of error may be set at 0.10 seconds. This means, for example, the control-timing combination is still registered as being input successfully if any of the timings are within ±0.10 seconds of their allocated timing (so, for example, the first press of the "Up" button occurs within 0.40 and 0.60 seconds of the 2-second time period, the second press of the "Up button occurs within 0.90 and 1.10 seconds of the 2-second time period, and so on).

Even with the pre-set allowable margin of error, however, executing the combination of Fig. 9A can be difficult for some users, however. For example, it may be for users who are new to the game or who are used to a different combat game (or a different character in the same combat game) with different control-timing combinations for executing a special move.

Thus, with the present technique, if it is determined based on the gameplay data that the user controlling Character 1 likely intends to execute the "lightening combo" special move and a control-timing combination input by the user corresponds sufficiently closely to that associated with this special move, the system may automatically execute the special move even though, under the pre-set allowable margin of error, the control-timing combination associated with the special move would not be judged as having been successfully input. This, again, allows the user's intention to be taken account as the game is played and to assist the user in a bespoke manner.

Figs. 9B and 9C show examples of incorrect control-timing combinations which, if the "lightening combo" special move is determined by the machine learning model to be a likely intention of the user, are deemed to correspond sufficiently closely to the correct control-timing combination of Fig. 9A.

In Fig. 9B, the incorrect control-timing combination is different from the correct control-timing combination of Fig. 9A in that, instead of a second press of the "Up" button at 1.00 seconds followed by a press of the "Down" button at 1.25 seconds, these button presses are reversed. That is, the "Down" button is pressed at 1.00 seconds and the "Up" button is pressed at 1.25 seconds. Two of the controls in the control-timing combination have therefore been incorrectly swapped. However, because the intention of the user to execute the "lightening combo" special move has been predicted by the machine learning mode based on the gameplay data and because only two of the controls have been swapped, the system executes the special move as if the user had input the correct control-timing combination. A temporary control reconfiguration therefore occurs (that is, a reconfiguration from the control-timing combination of Fig. 9A to that of Fig. 9B), allowing the special move to be executed.

It will be appreciated this example may be adjusted accordingly depending on the extent to which the game developer and/or user, for example, wishes to enable users to have automated assistance in the game. For example, to give users more assistance, a larger number of incorrect button presses may be allowed. In this case, two incorrect button presses have been allowed (that is, one instance of pressing "Down" instead of up and one instance of pressing "Up" instead of down). Allowing more incorrect button presses (e.g. three or more) provides the user with more assistance. On the other hand, allowing fewer incorrect button presses (e.g. only one) provides the user with less assistance. A user may be presented with an option to adjust the amount of assistance provided in a settings menu of the game, for example.

In Fig. 9C, the incorrect control-timing combination is different from the correct control-timing combination of Fig. 9A in that, instead of the first press of the "Up" button occurring at 0.50 seconds, it instead occurs at 0.70 seconds. The error is therefore more than the 0.10 second standard allowable margin of error. However, because the intention of the user to execute the "lightening combo" special move has been predicted and the timing of only one of the inputs is mistimed by more than the standard margin of error, the system executes the special move as if the user had input the correct control-timing combination. A temporary control reconfiguration therefore occurs (that is, a reconfiguration from the control-timing combination of Fig. 9A to that of Fig. 9C), allowing the special move to be executed.

Again, it will be appreciated this example may be adjusted accordingly depending on the extent to which the game developer and/or user, for example, wishes to enable users to have automated assistance in the game. For example, to give users more assistance, a larger number of mistimed button presses and/or a larger extended margin of error may be allowed. In this case, one mistimed button press which is still within an extended margin of error of, say, 0.25 seconds, has been allowed (that is, the first press of the "Up" button at 0.70 seconds instead of 0.50 seconds, so the error is 0.20 seconds). Allowing more mistimed button presses (e.g. two or more) and/or allowing a larger extended margin of error (e.g. more than 0.25 seconds) provides the user with more assistance. On the other hand, allowing fewer mistimed button presses and/or allowing a smaller extended margin of error (e.g. 0.15 or 0.20 seconds) provides the user with less assistance. A user may again be presented with an option to adjust the amount of assistance provided in a settings menu of the game, for example.

In general, a correct control-timing combination (e.g. that of Fig. 9A) is a predetermined required input comprises activation of a plurality of first input controls in a first order at a first timing. An incorrect control-timing combination (e.g. that of Figs. 9B or 9C) is recorded as an input from a user comprises activation of a plurality of second input controls in a second order at a second timing. The correct and incorrect control-timing combinations are determined to correspond sufficiently closely when a difference between the first and second input controls meets a predetermined condition (e.g. only a predetermined number of the controls in the sequence are incorrectly input), a difference between the first and second orders meets a predetermined condition (e.g. only a predetermined number of control swaps in the input sequence are made) and/or a difference between the first and second timings meets a predetermined condition (e.g. a mistiming of any one of the controls in the input sequence is below a predetermined time period).

In the example of Figs. 4 to 6, the control reconfiguration is fixed until a later reconfiguration occurs or the current gaming session ends, for example. Furthermore, once the control reconfiguration occurs, the intended action of the player (e.g. shoot) is not executed immediately. Rather, it will only be executed next time the user intends to take that intended action (e.g. next time the player shoots). On the other hand, in the example of Figs. 8 and 9, once the temporary control reconfiguration occurs, the intended action of the player (e.g. execution of the "lightening combo" special move) is executed immediately. The temporary control reconfiguration only lasts until the intended action of the player has been executed. The control reconfiguration then returns to the standard configuration (but can be temporarily reconfigured again based on the gameplay data and extent to which the standard configuration is deviated from, as described above).

In an example, when the difference between a correct control-timing combination (e.g. that of Fig. 9A) and an incorrect controlling-timing combination (e.g. that of Fig. 9C) is only a difference in the corresponding first and second timings of those combinations (so all controls in the incorrect control-timing combination are correctly input in the correct order) and this difference occurs a predetermined number of consecutive instances (e.g. 3, 5 or 10 instances) with the mistiming at all consecutive instances being within a predetermined threshold (e.g. 0.10 seconds) of each other, this difference may be due to a fixed time lag caused by button and/or network latency. For example, using the example of Fig. 9A, a latency of 0.50 seconds may cause a delay of 0.50±0.10 seconds in successively activating each of the controls "X", "Up", "Up", "Down" and "Circle" (with activation of each of these controls being an instance of mistiming).

In this case, the correct control-timing combination may be reconfigured to compensate for the mistiming and the reconfiguration fixed (e.g. until the end of the current gaming session). This allows the system to automatically detect and compensate for fixed time lags in games. It may be particularly useful for dance, music and/or rhythm games, for example, which require a user to activate particular controls or perform particular actions according to corresponding indicators which appear successively (e.g. on-screen) at timings to mimic dancing, guitar playing or the like.

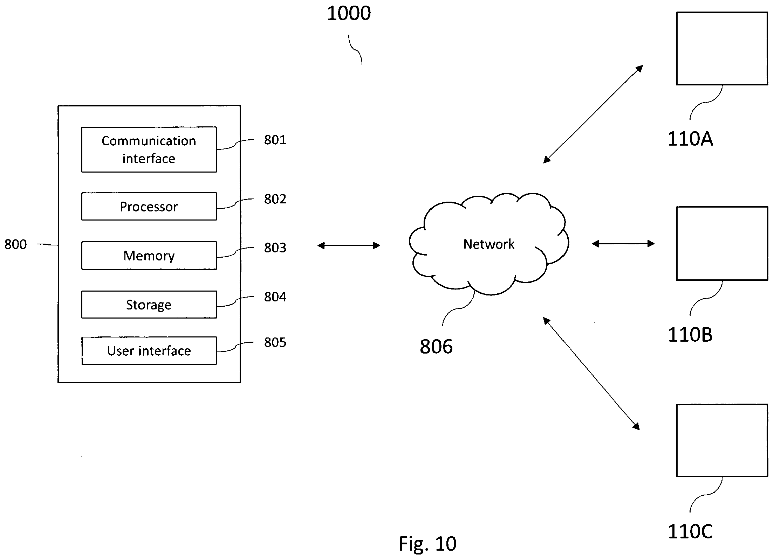

In an example, the machine learning model for predicting the intended action of the user (and thus the specific control of the controller 104 the user intends to activate) is executed by an external server 800 which connects to a plurality of games consoles 110A to 110C over a network 806 (e.g. the internet). This forms a system is exemplified in Fig. 10.

This allows the machine learning model to be trained (e.g. to relate player and ball position information to corresponding actions) based on the gameplay of multiple real players (with player permission). Data for training the machine learning model can therefore be obtained quickly and easily as users play the video game concerned. Furthermore, once trained, gameplay data (e.g. the current player and ball position information) of each user can be input to the machine learning model to predict the user's intended action and offer assistance to that user in the way described. The present technique thus uses readily available gameplay data to train the machine learning model and make that trained machine learning model available to all users for providing in-game assistance to them.

The server 800 of Fig. 10 comprises a communication interface 801 for sending electronic information to and/or receiving electronic information from one or more other apparatuses (e.g. games consoles 110A to 110C), a processor 802 for executing electronic instructions, a memory 803 for storing the electronic instructions to be executed and electronic input and output information associated with the electronic instructions, a storage medium 804 (e.g. a hard disk drive or solid state drive) for long term storage of information and a user interface 805 (e.g. a touch screen, a non-touch screen, buttons, a keyboard and/or a mouse) for receiving commands from and/or outputting information to a user (e.g. a game developer and/or network provider). Each of the communication interface 801, processor 802, memory 803, storage medium 804 and user interface 805 are implemented using appropriate circuitry, for example. The processor 802 controls the operation of each of the communication interface 801, memory 803, storage medium 804 and user interface 805.

In an example, game developers may access the machine learning model via an application programing interface (API) made available by the server 800. This may allow both training of the machine learning model (e.g. by providing input gameplay data and corresponding actions as labelled output data) and use of the trained machine learning model through specific API calls executed by the video game application concerned on each of the games consoles 110A to 110C. This reduces the need for individual game developers to have specialist expertise in the machine learning model concerned and also reduces the processing that needs to be carried out on each individual games console (thereby alleviating any reduction in games console performance).

In the described examples, the labelled output data on which the machine learning model is trained is labelled as an action in the game (e.g. "shoot", "pass", "lob", "slide tackle", "tackle", etc. in a virtual soccer game, "turn right", "turn left", "accelerate", "brake", etc. in a racing game, and the like). In an example, whenever a user takes an action in the game (by activating one of the controls of the controller, for example), the game application makes an API call to the server 800 indicating the gameplay data (e.g. player and ball positions) at the time that action was taken. The server 800, in response, then returns the predicted action. This allows the games console to compare the predicted action with the actual action taken by the user. Based on the current control configuration known to the games console (that is, which control of the controller 104 is assigned to which action), the games console may then suggest a control reconfiguration (e.g. swapping the buttons for executing the predicted action and the actual action taken).

It will be appreciated that the present technique may be applied to any game (e.g. virtual soccer games, racing games, combat games, action adventure games, transport simulators (e.g. flight simulators for automatically suggesting whether tilt-inverse should be on or off) and the like) for which, based on a learned relationship between current gameplay data and likely action, the actions of the user can be predicted and compared to the actions actually taken by the user to provide automatic control configuration assistance. The present technique is not limited to actions or commands input by the user using a controller 104. For example, it may be applied to gesture inputs and/or vocal inputs or the like.

In any of the above examples, the control reconfiguration may be executed automatically without asking the user first (e.g. via a message box like message box 600). This allows the control configuration to be dynamically adjusted without the need for the gameplay to be interrupted or without additional input from the user. Alternatively, the user may be consulted before the control reconfiguration is enabled (e.g. via a message box like message box 600), thereby providing the user with improved control and visibility of any proposed control reconfiguration. Game application- and/or system-level settings may be adjusted to allow a user to select which of these alternatives are preferred, for example.

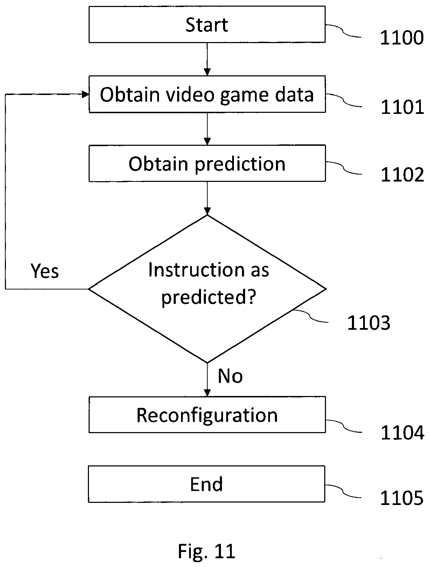

Fig. 11 shows an example method. The method is executed by the CPU 20 and/or GPU 30, for example.

The method starts at step 1100.

At step 1101, video game data is obtained from a video game application indicating an in-game situation. For example, the video game data may be gameplay data such as the player and ball position data of the examples of Figs. 4 to 6 or the character and health data of the examples of Figs. 8 and 9. In general, it may often be the case that the video game data comprises a position of one or more in-game characters (e.g. virtual soccer players) and/or a position of one or more in-game objects (e.g. a virtual soccer ball).

At step 1102, data indicating a predicted in-game action of a first user (that is, the current, playing user) in response to the in-game situation is obtained. The data indicating the predicted in-game action of the first user being based on past video game data and past in-game actions of one or more second users. For example, the predicted in-game action may be obtained from a machine learning classification model trained with a data set like that shown in Fig. 5. The predicted in-game action may be, for example, causing a virtual soccer player to "shoot" or causing a virtual combat character to perform a special move.

At step 1103, it is determined, based on a recorded input from the first user (e.g. an activated control such as the "square" or "circle" button or a control-timing combination input by the user) whether or not the predicted in-game action is instructed by the first user.

If it is determined that the predicted in-game action is instructed by the user (e.g. the predicted in-game action is "shoot" and the user implements a "shoot" action), the method returns to step 1101.

On the other hand, if it is determined that the predicted in-game action is not instructed by the user (e.g. the predicted in-game action is "shoot" but the user implements a "lob" action), the method proceeds to step 1104. In one example, this may only occur after the predicted in-game action is not instructed by the user a predetermined number of times (e.g. three times) in succession.

At step 1104, based on the determination at step 1103, a reconfiguration process for reconfiguring a required input for the first user for instructing the predicted in-game action is performed.

For example, the reconfiguration process may involve swapping the buttons for "shoot" and "lob" in a soccer simulation game (e.g. swapping the role of the "circle" and "square" buttons on controller 104) so that next time the user is predicted to "shoot", selecting the control that was previously associated with "lob" will now be the control associated with "shoot". The required input for "shoot" is thus reconfigured to be the recorded input (e.g. pressing the "circle" button) which caused the unwanted "lob" action to be executed. This reconfiguration may be kept until a further reconfiguration takes place or until the end of the current gaming session, for example.

In another example, the reconfiguration process involves a temporary reconfiguration and the predicted in-game action is then executed automatically (without any further input from the first user being required, for example). For example, execution of the "lightening combo" special move exemplified in Fig. 8 may be executed in response to recording input of the control-timing combination of Fig. 9B or 9C from the user. After execution of the special move, the required input from the first user is reset to a predetermined required input (e.g. the standard control-timing combination of Fig. 9A).

The method ends at step 1105.

The present technique thus provides a way of allowing the way a video game is controlled to be automatically and dynamically adjusted depending on the needs of a user with a reduced need to manual reconfiguration by the user. User convenience is therefore improved.

Example(s) of the present technique are defined by the following numbered clauses:
1. A data processing apparatus comprising circuitry configured to:
   obtain video game data from a video game application indicating an in-game situation;
   obtain data indicating a predicted in-game action of a first user in response to the in-game situation, the data indicating the predicted in-game action of the first user being based on past video game data and past in-game actions of one or more second users,;
   determine, based on a recorded input from the first user, whether or not the predicted in-game action is instructed by the first user; and
   based on the determination, perform a reconfiguration process for reconfiguring a required input for the first user for instructing the predicted in-game action.
2. A data processing apparatus according to clause 1, wherein the reconfiguration process is performed when it is determined that the predicted in-game action has not been instructed by the user a predetermined number of times in succession.
3. A data processing apparatus according to clause 1 or 2, wherein the reconfiguration process comprises:
   based on the determination, controlling output of a message to the first user indicating a proposal to reconfigure the required input for the first user for instructing the predicted in-game action;
   receiving a selection from the first user indicating whether or not the proposal is accepted; and
   if the proposal is accepted, reconfiguring the required input for the first user for instructing the predicted in-game action.
4. A data processing apparatus according to clause 3, wherein, in an absence of a selection from the first user within a predetermined period of time, the proposal is accepted.
5. A data processing apparatus according to any preceding clause, wherein reconfiguring the required input for the first user for instructing the predicted in-game action comprises setting the recorded input from the first user as the required input for the first user for instructing the predicted in-game action.
6. A data processing apparatus according to clause 5, wherein the circuitry is configured to, after reconfiguring the required input for the first user for instructing the predicted in-game action, control the predicted in-game action to be executed and reset the required input for the first user for instructing the predicted in-game action to a predetermined required input.
7. A data processing apparatus according to clause 6, wherein:
   the predetermined required input comprises activation of a plurality of first input controls in a first order at a first timing;
   the recorded input from the first user comprises activation of a plurality of second input controls in a second order at a second timing; and
   differences between the first and second input controls, first and second orders and first and second timings each satisfy a respective predetermined condition.
8. A data processing apparatus according to any preceding clause, wherein the video game data comprises one or more of a position of one or more in-game characters and a position of one or more in-game objects.
9. A data processing apparatus according to any preceding clause, wherein the circuitry is configured to:
   receive a pose estimation of the first user; and
   perform the reconfiguration process based on the received pose information.
10. A data processing apparatus according to clause 9, wherein the pose estimation indicates the first user is leaning to a side or jumping.
11. A data processing apparatus according to any preceding clause, wherein the predicted in-game action of the first user is determined by inputting the video game data to a machine learning model trained using the past video game data and past in-game actions of the one or more second users.
12. A data processing apparatus according to clause 11, wherein the machine learning model is executed by a second data processing apparatus and the circuitry is configured to transmit the video game data to the second data processing apparatus and, in response, receive the data indicating the predicted in-game action of the first user from the second data processing apparatus.
13. A data processing method comprising:
   obtaining video game data from a video game application indicating an in-game situation;
   obtaining data indicating a predicted in-game action of a first user in response to the in-game situation, the data indicating the predicted in-game action of the first user being based on past video game data and past in-game actions of one or more second users,;
   determining, based on a recorded input from the first user, whether or not the predicted in-game action is instructed by the first user; and
   based on the determination, perform a reconfiguration process for reconfiguring a required input for the first user for instructing the predicted in-game action.
14. A program for controlling a computer to perform a method according to clause 13.
15. A computer-readable storage medium storing a program according to clause 14.

Numerous modifications and variations of the present disclosure are possible in light of the above teachings. It is therefore to be understood that, within the scope of the claims, the disclosure may be practiced otherwise than as specifically described herein.

In so far as embodiments of the disclosure have been described as being implemented, at least in part, by one or more software-controlled information processing apparatuses, it will be appreciated that a machine-readable medium (in particular, a non-transitory machine-readable medium) carrying such software, such as an optical disk, a magnetic disk, semiconductor memory or the like, is also considered to represent an embodiment of the present disclosure. In particular, the present disclosure should be understood to include a non-transitory storage medium comprising code components which cause a computer to perform any of the disclosed method(s).

It will be appreciated that the above description for clarity has described embodiments with reference to different functional units, circuitry and/or processors. However, it will be apparent that any suitable distribution of functionality between different functional units, circuitry and/or processors may be used without detracting from the embodiments.

Described embodiments may be implemented in any suitable form including hardware, software, firmware or any combination of these. Described embodiments may optionally be implemented at least partly as computer software running on one or more computer processors (e.g. data processors and/or digital signal processors). The elements and components of any embodiment may be physically, functionally and logically implemented in any suitable way. Indeed, the functionality may be implemented in a single unit, in a plurality of units or as part of other functional units. As such, the disclosed embodiments may be implemented in a single unit or may be physically and functionally distributed between different units, circuitry and/or processors.

Although the present disclosure has been described in connection with some embodiments, it is not intended to be limited to these embodiments. Additionally, although a feature may appear to be described in connection with particular embodiments, one skilled in the art would recognize that various features of the described embodiments may be combined in any manner suitable to implement the present disclosure.

## Claims

1. A data processing apparatus comprising circuitry configured to:
obtain video game data from a video game application indicating an in-game situation;
obtain data indicating a predicted in-game action of a first user in response to the in-game situation, the data indicating the predicted in-game action of the first user being based on past video game data and past in-game actions of one or more second users;
determine, based on a recorded input from the first user, whether or not the predicted in-game action is instructed by the first user; and
based on the determination, perform a reconfiguration process for reconfiguring a required input for the first user for instructing the predicted in-game action.

2. A data processing apparatus according to claim 1, wherein the reconfiguration process is performed when it is determined that the predicted in-game action has not been instructed by the user a predetermined number of times in succession.

3. A data processing apparatus according to claim 1 or 2, wherein the reconfiguration process comprises:
based on the determination, controlling output of a message to the first user indicating a proposal to reconfigure the required input for the first user for instructing the predicted in-game action;
receiving a selection from the first user indicating whether or not the proposal is accepted; and
if the proposal is accepted, reconfiguring the required input for the first user for instructing the predicted in-game action.

4. A data processing apparatus according to claim 3, wherein, in an absence of a selection from the first user within a predetermined period of time, the proposal is accepted.

5. A data processing apparatus according to any preceding claim, wherein reconfiguring the required input for the first user for instructing the predicted in-game action comprises setting the recorded input from the first user as the required input for the first user for instructing the predicted in-game action.

6. A data processing apparatus according to claim 5, wherein the circuitry is configured to, after reconfiguring the required input for the first user for instructing the predicted in-game action, control the predicted in-game action to be executed and reset the required input for the first user for instructing the predicted in-game action to a predetermined required input.

7. A data processing apparatus according to claim 6, wherein:
the predetermined required input comprises activation of a plurality of first input controls in a first order at a first timing;
the recorded input from the first user comprises activation of a plurality of second input controls in a second order at a second timing; and
differences between the first and second input controls, first and second orders and first and second timings each satisfy a respective predetermined condition.

8. A data processing apparatus according to any preceding claim, wherein the video game data comprises one or more of a position of one or more in-game characters and a position of one or more in-game objects.

9. A data processing apparatus according to any preceding claim, wherein the circuitry is configured to:
receive a pose estimation of the first user; and
perform the reconfiguration process based on the received pose information.

10. A data processing apparatus according to claim 9, wherein the pose estimation indicates the first user is leaning to a side or jumping.

11. A data processing apparatus according to any preceding claim, wherein the predicted in-game action of the first user is determined by inputting the video game data to a machine learning model trained using the past video game data and past in-game actions of the one or more second users.

12. A data processing apparatus according to claim 11, wherein the machine learning model is executed by a second data processing apparatus and the circuitry is configured to transmit the video game data to the second data processing apparatus and, in response, receive the data indicating the predicted in-game action of the first user from the second data processing apparatus.

13. A data processing method comprising:
obtaining video game data from a video game application indicating an in-game situation;
obtaining data indicating a predicted in-game action of a first user in response to the in-game situation, the data indicating the predicted in-game action of the first user being based on past video game data and past in-game actions of one or more second users;
determining, based on a recorded input from the first user, whether or not the predicted in-game action is instructed by the first user; and
based on the determination, perform a reconfiguration process for reconfiguring a required input for the first user for instructing the predicted in-game action.

14. A program for controlling a computer to perform a method according to claim 13.

15. A computer-readable storage medium storing a program according to claim 14.
